# EUROPEAN PATENT SPECIFICATION

(11) **EP 1 996 836 B1**
(45) Date of publication and mention of the grant of the patent: **16.09.2009**
(21) Application number: 07723379.9
(22) Date of filing: 19.03.2007
(51) Int. Cl.: F16H 48/08, B60K 17/16

(54) **TRANSMISSION UNIT FOR VEHICLES**
GETRIEBEEINHEIT FÜR FAHRZEUGE
UNITÉ DE TRANSMISSION POUR VÉHICULES

(30) Priority: 20.03.2006 IT VI20060076
(43) Date of publication of application: 03.12.2008
(73) Proprietor: Amer S.p.A., 36078 Valdagno (VI) (IT)
(72) Inventor: BATTISTELLA, Francesco, I-36078 Valdagno (VI) (IT)
(74) Representative: Bonini, Ercole
(86) International application number: PCT/EP2007/002412
(87) International publication number: WO 2007/107316

(56) References cited:
- GB-A- 922 004
- JP-A- 9 177 933
- US-A- 4 870 820
- US-A- 5 980 416

## Description

The invention concerns a transmission unit for vehicles, in particular but not necessarily for electric vehicles, like for example wheelchairs for disabled and floor washers/dryers.

More particularly, the transmission unit that is the subject of the invention refers to a differential gearmotor unit and the construction features of said unit, according to the preamble of claim 1 and as it is disclosed in US 5 980 416 A. At present the differential gearmotor units normally used in different fields and in particular in the field of electric transmission comprise a drive shaft connected to a differential unit; in the case of gearmotors with orthogonal axes, said shaft transmits motion to a crown gear via a gear of the worm screw type.

In some cases the crown gear is provided with two diametrically opposed cavities housing planetary gear wheels that mesh with two sun gear wheels belonging each to an axle shaft that transmits motion to the driven wheel.

The crown is generally made of bronze and the terminal parts of the two axle shafts are both inserted in the centre hole of the crown gear, so that each axle shaft can be introduced in said hole for a given section.

In order to avoid direct contact between the terminal parts of the two axle shafts, it is possible to interpose a diaphragm between them, for example a diaphragm made of self-lubricating plastic material, in order to avoid friction that negatively affects the transmission of motion.

One of the drawbacks of this type of construction lies in that the housings of the bearings that support each one of the two axle shafts must be machined with great precision, since they must be coupled slidingly and rotatingly, if possible without excessive clearance, in the crown gear hole.

This alone involves a considerable cost.

Furthermore, while the vehicle moves, it may happen that both axle shafts support the crown gear and in this conditions the wheels may not be perfectly coplanar.

For this reason, the hole that houses the two ends of the axle shafts should allow a certain clearance, so as to permit a slight misalignment of the axle shafts themselves.

This necessarily worsens the meshing action of the crown gear with the worm screw that transmits motion to the crown gear itself and consequently the transmission unit will be subjected to considerable damage over time.

The aim of the invention is to construct a transmission unit for vehicles comprising a gearmotor unit with differential that overcomes the drawbacks described above.

More particularly, the invention intends to carry out a transmission unit where the differential, though being compact, even in critical conditions does not cause the deterioration of its mechanical components.

A further aim of the invention is to simplify the mechanical machining operations necessary for the construction of the differential unit and thus to reduce construction costs.

All the aims mentioned above and others that will be highlighted in greater detail below have been achieved through the construction of the transmission unit that is the subject of the invention, which is particularly suitable for vehicles and comprises:
- a drive shaft connected to a gearmotor unit with differential, said differential comprising:
   - a crown gear that meshes with said drive shaft, said crown gear housing, in two diametrically opposed cavities, one pair of planetary gear wheels having their axis lying on an ideal plane containing said crown gear;
   - two sun gear wheels meshing with said planetary gear wheels, each connected to an axle shaft belonging to a driven wheel,
**characterized in that** said crown gear is housed, rotatingly free, in one axle shaft only.

Advantageously, according to the invention, the fact that one axle shaft only is inserted in the crown gear makes it possible to obtain a fixed axle base between worm screw and crown gear, without oscillations during use; to this end it is sufficient to machine accurately and with reduced tolerances only the axle shaft in the section where it is coupled to the crown gear, as well as the reduction gear body in the seat of the bearing that supports the axle shaft in question.

Furthermore, according to a preferred embodiment of the invention, the axle shaft coupled to the crown gear cannot move axially due to the presence of two stop elements preferably constituted by elastic rings like snap rings.

Further characteristics and details of the invention will be highlighted in greater detail in the description of a preferred embodiment of the invention, provided as an example without limitation with reference to the attached drawings, wherein:
- Figure 1 is a schematic view of the transmission unit that is the subject of the invention;
- Figure 2 shows an axle shaft of the differential unit of Figure 1 before coupling to the crown gear;
- Figure 3 shows the axle shaft of Figure 2 once coupled to the crown gear;
- Figure 4 shows a cross section of the differential gearmotor unit that is the subject of the invention;
- Figure 5 shows the transmission unit of the invention applied to a structure suitable for constructing a wheelchair for disabled.

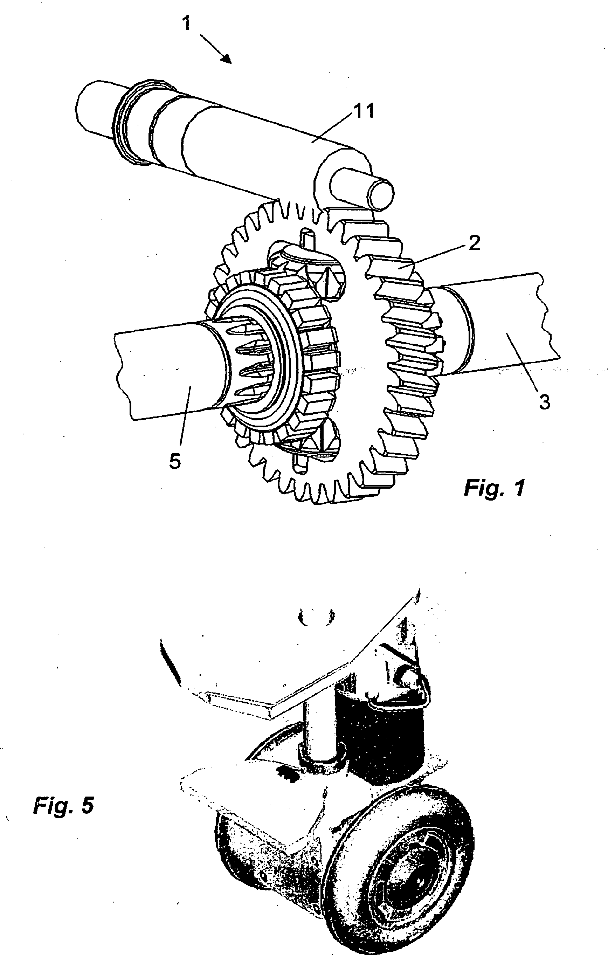

With reference to the drawings mentioned above and in particular to Figure 1, it can be observed that the transmission unit of the invention comprises a drive shaft, indicated as a whole by **1,** provided on its terminal part with a pinion **11** that meshes with the crown gear **2.**

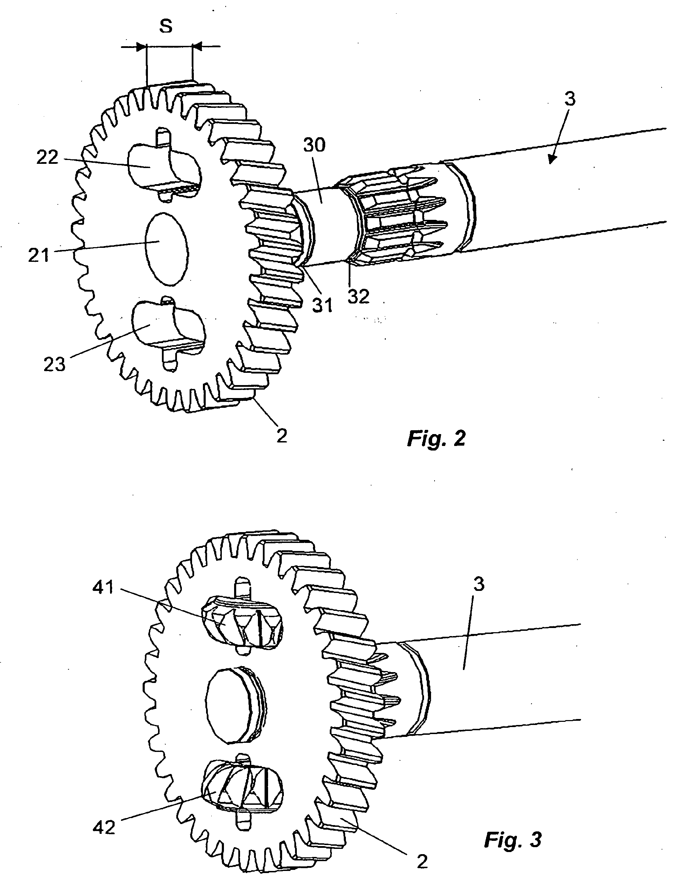

Said crown gear, as shown in greater detail in Figure 2, has a centre hole **21** suited to house an axle shaft and two equal and opposed cavities **22** and **23** that, as will be explained below, house the same number of planetary gear wheels.

The crown gear **2** is preferably made of bronze in order to ease machining of the teeth, of the seats **21, 22** and **23** and also meshing of its teeth with the pinion **11** of the drive shaft **1.**

One of the two axle shafts, indicated by **3,** has its end **30** longer than the thickness **S** of the crown gear **2.**

The diameter of said end **30** is substantially equal to that of the hole **21** of the crown gear, with limited tolerance that however allows the axle shaft to rotate freely in the hole **21.**

In this regard it should be noted that, in order to guarantee smooth operation of the differential, the surface of the end **30** is hardened through the known heat treatments, for example, or by adding material.

The surface **30** is then carefully machined in such a way as to reduce friction to a minimum during rotation in the hole **21.**

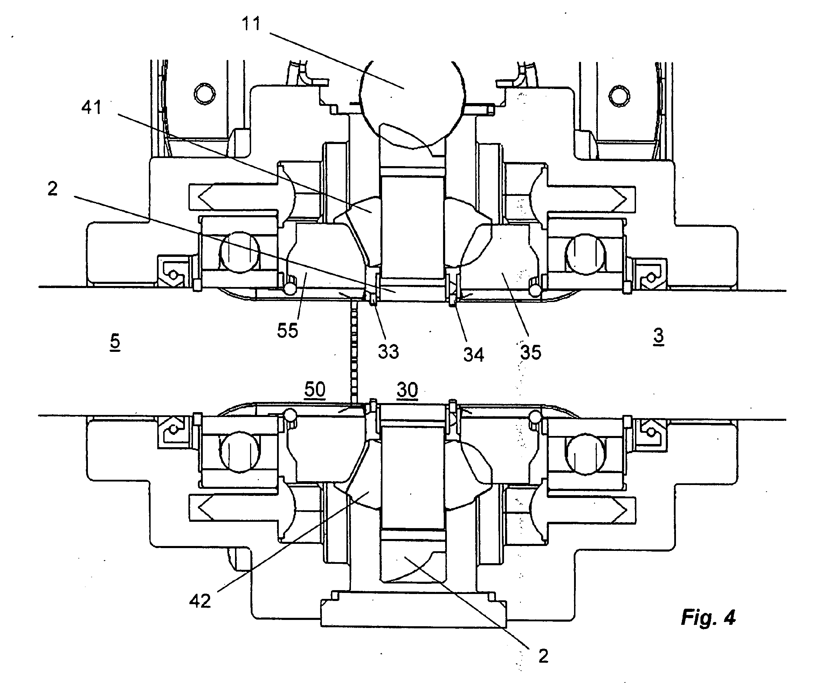

As can be better seen in Figure 4, in order to prevent the axle shaft **3** from sliding during motion, the end **30** of the axle shaft **3** is provided with two circular grooves **31** and **32** properly spaced from each other and housing axle shaft stop elements that, in the case illustrated in the example, are constituted by two snap rings **33** and **34** positioned on opposite sides and immediately out of the hole **21** of the crown gear **2.**

It is clear that this prevents any axial sliding of the axle shaft **3.**

As shown in Figures 2 to 4, the planetary gear wheels **41** and **42** are housed in the cavities **22** and **23,** respectively, and mesh with the sun gear wheel **35** belonging to the axle shaft **3** and fixedly coupled to the axle shaft **3** itself.

The planetary gear wheels **41** and **42** mesh, on the opposite side of the crown gear **2,** also with the sun gear wheel **55** coupled to the other axle shaft **5** opposite the axle shaft **3** and whose end **50,** as shown in Figure **4****,** does not fit in the hole **21.**

It is evident that in this way the end **50** of the axle shaft **5** as well as the seat of the bearing that supports the axle shaft itself can be machined less precisely, since the important aspect is only the fixed coupling of said end to the sun gear wheel **55** that, as already explained, receives motion from the two planetary gear wheels **41** and **42**.

It is important to point out also that it is not necessary to proceed to the surface treatment of the end **50** of the axle shaft **5,** since the surface of this end is not subjected to rolling friction owing to the fact that it is rigidly fixed to the sun gear wheel **55.**

This clearly avoids further processing, thus making the differential transmission unit more economic than those carried out according to the known art.

Obviously, the whole differential unit described above is housed in a case, indicated as a whole by **7,** that can be accessed and inspected for maintenance purposes.

The above description clearly shows that the invention achieves all the goals set.

In particular, the invention achieves the aim to simplify the construction of the differential and to maintain a fixed axle base between worm screw and crown gear, without oscillations.

The invention also achieves the aim to permit misalignments between the two axle shafts without affecting the transmission members.

The invention also prevents the axial sliding of an axle shaft with respect to the hole in the crown gear, a very important aspect that prevents deterioration of the transmission unit.

Obviously, instead of the snap rings it is possible to use other types of stop elements known to the expert skilled in the art, which in any case prevent the axial sliding of the axle shaft **3.**

Where technical features mentioned in any claim are followed by reference signs, those reference sings have been included for the sole purpose of increasing the intelligibility of the claims and accordingly such reference signs do not have any limiting effect on the interpretation of each element identified by way of example by such reference signs.

## Claims

1. Transmission unit with orthogonal axes for vehicles, comprising:
- a drive shaft (1) connected to a gearmotor unit with differential, said differential comprising:
• a crown gear (2) that meshes with said drive shaft (1), said crown gear housing, in two diametrically opposed cavities (22, 23), one pair of planetary gear wheels (41, 42) having their axis lying on an ideal plane containing said crown gear;
• two sun gear wheels (35, 55) meshing with said planetary gear wheels (41, 42), each connected to an axle shaft (3, 5) belonging to a driven wheel,
**characterized in that** said crown gear is housed, rotatingly free, in one axle shaft (3) only.

2. Unit according to claim 1), **characterized in that** said axle shaft (3) coupled to said crown gear (2) cannot move along the direction of its own axis due to the presence of two stop elements (33, 34) arranged on opposite sides with respect to said crown gear.

3. Unit according to claim 2), **characterized in that** said stop elements are elastic rings.

4. Unit according to any of the previous claims, **characterized in that** the section (30) of said axle shaft coupled to said crown gear (2) is surface hardened.

## Patentansprüche

1. Getriebeeinheit mit orthogonalen Achsen für Fahrzeuge, umfassend:
- eine Antriebswelle (1), die mit einer Getriebemotoreinheit mit Differential verbunden ist, wobei das Differential Folgendes umfasst:
• einen Zahnkranz (2), der mit der Antriebswelle (1) in Eingriff ist, wobei im Zahnkranz in zwei diametral gegenüberliegenden Hohlräumen (22, 23) ein Paar aus Planetenrädern (41, 42) untergebracht ist, deren Achse auf einer idealen Ebene, die den Zahnkranz enthält, liegt;
• zwei Sonnenräder (35, 55), die mit den Planetenrädern (41, 42) in Eingriff sind, wobei jedes mit jeweils einer Achswelle (3, 5) verbunden ist, die zu einem angetriebenen Rad gehört,
**dadurch gekennzeichnet, dass** der Zahnkranz frei drehend an nur einer Achswelle (3) aufgenommen ist.

2. Einheit nach Anspruch 1), **dadurch gekennzeichnet, dass** die Achswelle (3), die mit dem Zahnkranz (2) gekoppelt ist, aufgrund der Gegenwart von zwei Anschlagelementen (33, 34), die in Bezug auf den Zahnkranz an gegenüberliegenden Seiten angeordnet sind, sich nicht entlang der Richtung der eigenen Achse bewegen kann.

3. Einheit nach Anspruch 2), **dadurch gekennzeichnet, dass** die Anschlagelemente elastische Ringe sind.

4. Einheit nach einem der vorangegangenen Ansprüche, **dadurch gekennzeichnet, dass** der Abschnitt (30) der Achswelle, der mit dem Zahnkranz (2) gekoppelt ist, oberflächengehärtet ist.

## Revendications

1. Groupe de transmission avec axes orthogonaux pour véhicules, comprenant:
- un arbre de transmission (1) relié à un groupe motoréducteur avec différentiel, ledit différentiel comprenant:
• une couronne dentée (2) qui s'accouple avec ledit arbre de transmission (1), ladite couronne dentée logeant, en deux cavités diamétralement opposées (22, 23), une paire de roues dentées fonctionnant de satellites (41, 42) ayant leur axe se trouvant sur un plan idéal contenant ladite couronne dentée;
• deux roues dentées fonctionnant de planétaires (35, 55) s'accouplant avec lesdites roues dentées fonctionnant de satellites (41, 42), chacune reliée à un demi-axe (3, 5) appartenant à une roue motrice,
**caractérisé en ce que** ladite couronne dentée est logée, de manière pivotante libre, en un seul demi-axe (3).

2. Groupe selon la revendication 1), **caractérisé en ce que** ledit demi-axe (3) relié à ladite couronne dentée (2) ne peut pas se déplacer le long de la direction de son propre axe à cause de la présence de deux éléments d'arrêt (33, 34) positionnés sur des côtés opposés par rapport à ladite couronne dentée.

3. Groupe selon la revendication 2), **caractérisé en ce que** lesdits éléments d'arrêt sont des anneaux élastiques.

4. Groupe selon l'une quelconque des revendications précédentes, **caractérisé en ce que** la section (30) dudit demi-axe relié à ladite couronne dentée (2) est durcie sur la surface.
